# EUROPEAN PATENT SPECIFICATION

(11) **EP 2 746 744 B1**
(45) Date of publication and mention of the grant of the patent: **27.09.2017**
(21) Application number: 11872957.3
(22) Date of filing: 28.12.2011
(51) Int. Cl.: G01M 3/40, G01F 1/00

(54) **DETECTING APPARATUS, DETECTING METHOD, PROGRAM, AND RECORDING MEDIUM**
DETEKTOR, DETEKTIONSVERFAHREN, PROGRAMM UND AUFZEICHNUNGSMEDIUM
APPAREIL DE DÉTECTION, PROCÉDÉ DE DÉTECTION, PROGRAMME ET SUPPORT D'ENREGISTREMENT

(30) Priority: 30.09.2011 JP 2011218260
(43) Date of publication of application: 25.06.2014
(73) Proprietor: Omron Corporation, Kyoto-shi, Kyoto 600-8530 (JP)
(72) Inventor: KAWAI, Wakahiro, Kyoto-shi, Kyoto 600-8530 (JP)
(74) Representative: Kilian Kilian & Partner
(86) International application number: PCT/JP2011/080381
(87) International publication number: WO 2013/046480

(56) References cited:
- WO-A1-98/11415
- DE-A1- 4 238 738
- GB-A- 1 272 826
- JP-A- 2005 002 915
- JP-A- 2005 002 915
- JP-A- 2006 132 324
- JP-A- 2010 159 974
- JP-A- 2010 159 974
- US-A1- 2006 090 553
- US-A1- 2010 313 849

## Description

### TECHNICAL FIELD

The present invention relates to a detecting apparatus that detects a fluid leakage in a system which supplies a fluid through a pipe line to a fluid use apparatus that uses the fluid.

### BACKGROUND ART

An apparatus in which compressed air is used is frequently used in a production line in which product processing or assembly is performed. For example, an air cylinder is used in a driving unit of a production apparatus, or an air blow is used to remove processing waste or dust from the product. A large amount of compressed air is produced by a compressor, and supplied through the pipe line installed in the production line. According to a layout of the production line, a branch portion is formed in the pipe line through which the compressed air flows.

Sometimes an air leakage is generated in piping components such as the branch portion of the pipe line through which the compressed air flows, a connection portion to the production apparatus, and a regulator that adjusts the pressure of the compressed air. In the case that the air leakage is generated, there is a problem in that the air pressure is lost to excessively consume a power of the compressor.

Conventionally, in order to monitor the air leakage, a patrol is taken place in a factory to listen to a sound of the air leakage at a time the production line stops during nighttime, a holiday, and the like. Patent Documents 1 and 2 disclose a technology for monitoring the air leakage by installing a flowmeter or a pressure sensor in each important pipe line.

### PRIOR ART DOCUMENTS

### PATENT DOCUMENTS

Patent Document 1: Japanese Patent No. 2945936 (Publication date: September 6, 1996)
Patent Document 2: Japanese Patent No. 3439835 (Publication date: August 25, 2003)

Moreover, GB 1 272 826 A1 discloses an apparatus for indicating leakage of liquid from a container or conduit thereof. However, GB 1 272 826 A1 does not disclose that a detector of said apparatus detects fluid leakage on the basis of a first feature quantity as defined in claim 1.

Further prior art documents are JP 2010 159974 A, DE 42 38 738 A1, WO 98/11415 A1, US 2006/090553 A1 and JP 2005 002915 A.

### SUMMARY OF THE INVENTION

### PROBLEMS TO BE SOLVED BY THE INVENTION

However, in the method for listening to the sound of the air leakage, there is a limitation to the detection in the factory in which a noise such as a vibration sound exists. Additionally, when the patrol is irregularly taken place, there is also a problem in that the air leakage is overlooked for a long time.

In the technology disclosed in Patent Documents 1 and 2, it is necessary to install many flowmeters and pressure sensors in order to monitor the pipe line of the entire factory, which results in a problem of a cost increase.

The present invention has been made to solve the above problems, and an object thereof is to provide a detecting apparatus that can easily detect the fluid leakage at low cost, a detecting method, a program, and a recording medium. This object is achieved by the subject-matter of the independent claims 1 and 9. Further advantageous embodiments of the invention are the subject-matter of the dependent claims. Aspects of the invention are set out below.

### MEANS FOR SOLVING THE PROBLEM

A detector according to an aspect of the invention is configured to detect existence or non-existence of a fluid leakage based on power consumption of a fluid supply apparatus.

In addition, a detecting method of an aspect of the present invention includes a detecting step of detecting existence or non-existence of a fluid leakage based on power consumption of a fluid supply apparatus.

### EFFECT OF THE INVENTION

As described above, according to the present invention, advantageously the detecting apparatus that can easily detect the fluid leakage at low cost can be constructed.

### BRIEF DESCRIPTION OF THE DRAWINGS

Fig. 1 is a schematic diagram illustrating a schematic configuration of a detecting system according to one embodiment of the present invention.
Fig. 2 is a block diagram illustrating an internal configuration of a detecting apparatus in Fig. 1.
Fig. 3 illustrates an example of a power-supply management table.
Fig. 4 illustrates an example of an electromagnetic valve management table.
Fig. 5 illustrates an example of a first detecting threshold table.
Fig. 6 illustrates an example of an electromagnetic valve-sensor correspondence table.
Fig. 7 is a flowchart illustrating a flow of air leakage detecting processing in a first embodiment.
Fig. 8 is a block diagram illustrating an internal configuration of a detecting apparatus according to a second embodiment.
Fig. 9 illustrates a storage example of a third threshold storage unit.
Fig. 10 is a flowchart illustrating a flow of air leakage detecting processing in the second embodiment.
Fig. 11 illustrates an example of a measured value of a power meter of a compressor in the second embodiment.
Fig. 12 is a block diagram illustrating an internal configuration of a detecting apparatus according to a second modification.
Fig. 13 illustrates a storage example of an identical line information storage unit.

### MODE FOR CARRYING OUT THE INVENTION

### <First Embodiment>

### (Entire configuration of detecting system)

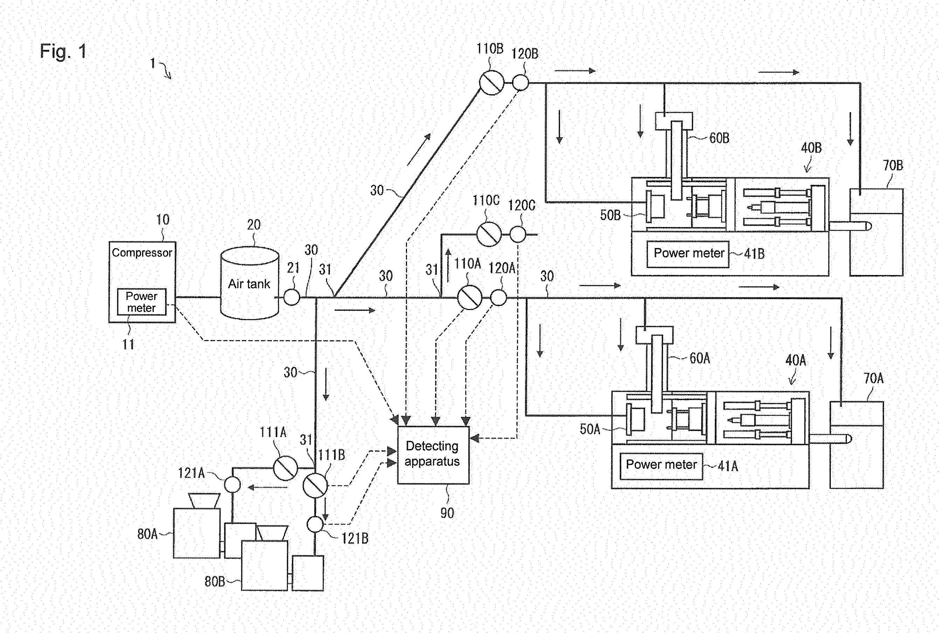

Hereinafter, one embodiment of the present invention will be described with reference to the drawings. Fig. 1 is a schematic diagram illustrating a schematic configuration of a detecting system according to the embodiment.

A detecting system 1 of a first embodiment includes a compressor 10, an air tank 20, a pipe line 30, injection molding machines 40A and 40B, air ejectors 50A and 50B that are of an apparatus (compressed air use apparatus) utilizing compressed air (compressed gas), take-out robots 60Aand 60B, pallet changers 70A and 70B, resin dryers 80A and 80B, and a detecting apparatus 90.

The detecting system 1 of the first embodiment dries a molding material (pellet) using the resin dryers 80A and 80B, and produces a product by performing insert molding of a workpiece (for example, metallic terminal) together with the dried molding material using a die by the injection molding machines 40A and 40B. Although the two injection molding machines 40A and 40B are illustrated in Fig. 1, there is no limitation to the number of injection molding machines included in the detecting system. The detecting system may include several or several tens of injection molding machines. The injection molding machines 40A and 40B include power meters 41A and 41B each of which measures electric energy consumed by the injection molding machine.

The air ejectors 50A and 50B, the take-out robots 60A and 60B, the pallet changers 70A and 70B, and the resin dryers 80A and 80B are installed with respect to the injection molding machines 40A and 40B, respectively. The air ejectors 50A and 50B eject molded articles from the dies of the injection molding machines 40A and 40B. The take-out robots 60A and 60B convey the molded articles ejected by the air ejectors 50A and 50B to conveyers. The pallet changers 70A and 70B supply pallets onto the conveyers. The resin dryers 80A and 80B dry the materials (molding materials) molded by the injection molding machines 40A and 40B.

In the first embodiment, the air ejectors, the take-out robots, the pallet changers, and the resin dryers, which correspond to respective injection molding machines, are the apparatuses (compressed air use apparatuses) that operate using the compressed air.

The air tank 20 stores the compressed air. A pressure gauge 21 is installed in the air tank 20 in order to measure the pressure in the air tank.

The compressor 10 generates the compressed air, and supplies the compressed air to the compressed air use apparatus through the air tank 20. The compressor 10 monitors the pressure measured by the pressure gauge 21 installed in the air tank 20, and the compressor 10 operates such that the measured pressure is maintained at a setting value or higher. Specifically, the compressor 10 performs one of (1) an on/off control operation to perform compressed air generating processing to supply the compressed air to the air tank 20 in the case that the pressure measured by the pressure gauge 21 is lower than the setting value and (2) an inverter control operation to generate the compressed air with an increased compression force to supply the compressed air to the air tank 20 in the case that the pressure measured by the pressure gauge 21 is lower than the setting value. In the first embodiment, it is assumed that the compressor 10 performs the inverter control operation.

The compressor 10 includes a power meter 11 that measures electric energy consumed by the compressor.

The pipe line 30 is piping that is installed to supply the compressed air of the air tank 20 to the air ejectors 50A and 50B, the take-out robots 60A and 60B, the pallet changers 70A and 70B, the resin dryers 80A and 80B, which are of the compressed air use apparatus. A starting end of the pipe line 30 is connected to the air tank 20, and a branch portion (branch point) 31 is provided in the middle of the pipe line according to a layout of the compressed air use apparatus. Each of a plurality of terminals of the pipe line 30 is connected to any one of the air ejectors 50A and 50B, the take-out robots 60A and 60B, the pallet changers 70A and 70B, and the resin dryers 80A and 80B.

A plurality of electromagnetic valves 110A, 110B, 110C, 111A, and 111B are installed in the middle of the pipe line 30 in order to open and close the pipe line. In the first embodiment, pressure sensors 120A, 120B, 120C, 121A, and 121B that measure the pressure of the pipe line 30 are installed in the pipe line 30 on a downstream side of the electromagnetic valves 110A, 110B, 110C, 111A, and 111B.

The detecting apparatus 90 detects an air leakage based on power consumption of the compressor 10, and the power consumption is measured by the power meter 11.

### (Configuration of detecting apparatus)

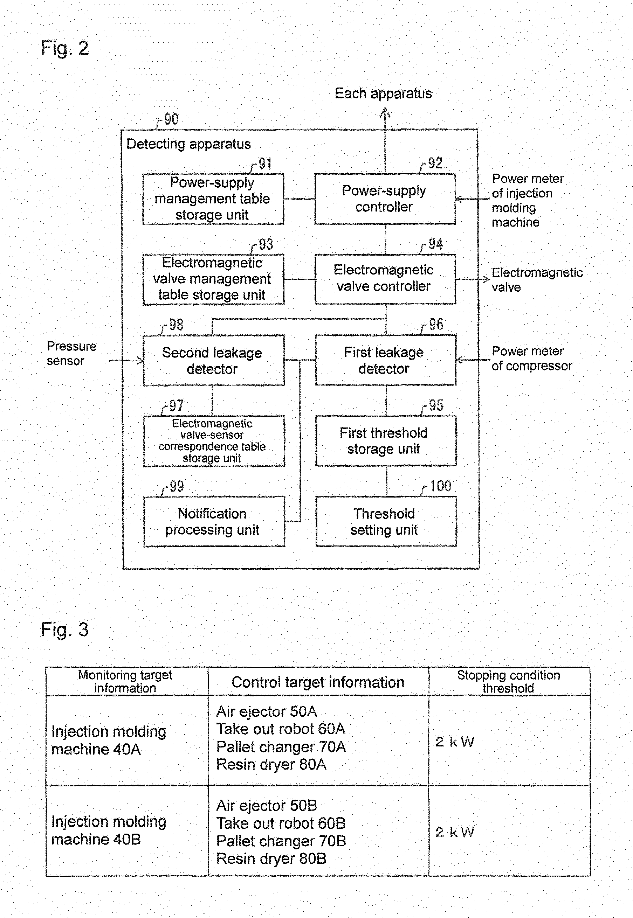

An internal configuration of the detecting apparatus 90 will be described below. Fig. 2 is a block diagram illustrating the internal configuration of the detecting apparatus 90. As illustrated in Fig. 2, the detecting apparatus 90 includes a power-supply management table storage unit 91, a power-supply controller 92, an electromagnetic valve management table storage unit 93, an electromagnetic valve controller 94, a first threshold storage unit 95, a first leakage detector 96, an electromagnetic valve-sensor correspondence table storage unit 97, a second leakage detector 98, a notification processing unit 99, and a threshold setting unit 100.

The power-supply management table storage unit 91 stores a power-supply management table therein with respect to each of the injection molding machines 40A and 40B. In the power-supply management table, monitoring target information identifying the injection molding machine, control target information identifying the compressed air use apparatus working with the injection molding machine, and a stopping condition threshold are correlated with one another. The stopping condition threshold is set to a value which is slightly larger than the power consumption in a predetermined period during the stopping of the injection molding machine and is smaller than the power consumption in the predetermined period during the operation of the injection molding machine.

Fig. 3 illustrates an example of the power-supply management table. As illustrated in Fig. 3, the monitoring target information indicating the injection molding machine 40A, the control target information identifying the air ejector 50A, the take-out robot 60A, the pallet changer 70A, and the resin dryer 80A, which work with the injection molding machine 40A, and the stopping condition threshold of "2 kW" are correlated with one another.

The power-supply controller 92 refers to the power-supply management table to control a power supply of the apparatus. The power-supply controller 92 compares first integral power consumption, which is obtained from the power meter 41A (or 41B) installed in the injection molding machine in the predetermined period, to the stopping condition threshold corresponding to the monitoring target information indicating the injection molding machine, with respect to each of the injection molding machines 40A and 40B. As used herein, for example, the predetermined period is past 5 minutes from a present clock time. The power-supply controller 92 can calculate the first integral power consumption in the predetermined period by monitoring measured values of the power meters 41A and 41B at predetermined unit time intervals (for example, 1 minute).

In the case that the first integral power consumption is less than or equal to the stopping condition threshold, the power-supply controller 92 controls a power supply of the apparatus indicated by the control target information corresponding to the monitoring target information so as to turn the apparatus from on to off, and the power-supply controller 92 outputs the monitoring target information corresponding to the first integral power consumption to the electromagnetic valve controller 94.

At this point, the stopping condition threshold is set to a value which is slightly larger than the power consumption in the predetermined period during the stopping of the injection molding machine 40A (or 40B) and is smaller than the power consumption in the predetermined period during the operation of the injection molding machine. For this reason, in the case that the first integral power consumption is less than or equal to the stopping condition threshold, the power-supply controller 92 can determine that the injection molding machine 40A (or 40B) stops, and turn the power supply of the apparatus working with the injection molding machine 40A (or 40B) from on to off to stop the apparatus.

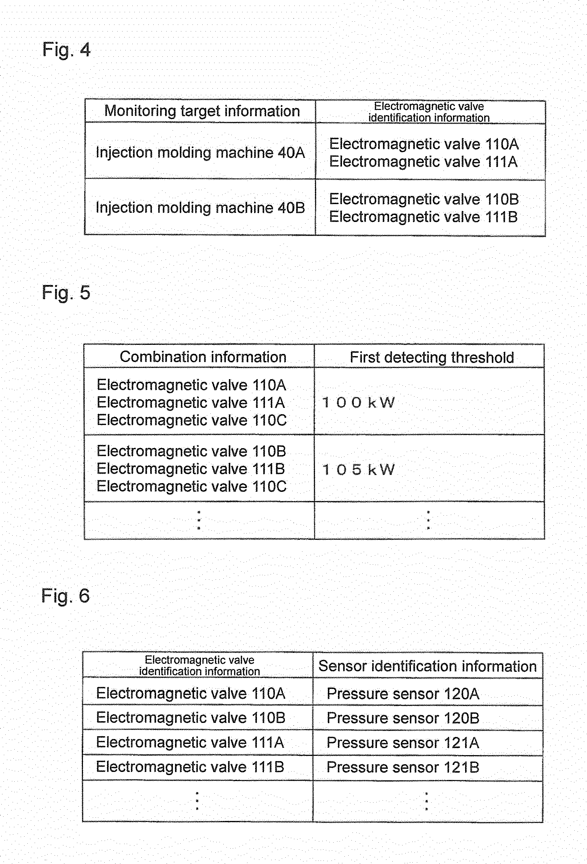

The electromagnetic valve management table storage unit 93 stores an electromagnetic valve management table therein with respect to each of the injection molding machines 40A and 40B. In the electromagnetic valve management table, the monitoring target information identifying the injection molding machine and electromagnetic valve identification information identifying the electromagnetic valve located on an upstream side of the apparatus working with the injection molding machine are correlated with each other. Fig. 4 illustrates an example of the electromagnetic valve management table. As illustrated in Fig. 4, the injection molding machine 40A is correlated with the electromagnetic valve 110A located on the upstream side of the air ejector 50A, the take-out robot 60A, and the pallet changer 70A, which work with the injection molding machine 40A, and the electromagnetic valve 111A located on the upstream side of the resin dryer 80A.

The electromagnetic valve controller 94 refers to the electromagnetic valve management table to control the opening and closing of the electromagnetic valves 110A, 110B, 110C, 111A, and 111B. When receiving the monitoring target information from the power-supply controller 92, the electromagnetic valve controller 94 perform the control (closing control) to close the electromagnetic valves 110A, 110B, 110C, 111A, and 111B indicated by the electromagnetic valve identification information corresponding to the monitoring target information.

When performing the closing control to one of the electromagnetic valves 110A, 110B, 110C, 111A, and 111B, the electromagnetic valve controller 94 outputs a detection starting instruction to the first leakage detector 96 and the second leakage detector 98. Opening and closing information indicating an opening and closing state of each of the electromagnetic valves 110A, 110B, 110C, 111A, and 111B after the closing control and closing target information indicating the electromagnetic valve closed by the closing control are added to the detection starting instruction.

The electromagnetic valve controller 94 monitors the opening and closing states of the electromagnetic valves 110A, 110B, 110C, 111A, and 111B, and can generate the opening and closing information according to a monitoring result.

The first threshold storage unit 95 stores a first detecting threshold table therein. In the first detecting threshold table, combination information indicating each combination of the closed electromagnetic valves 110A, 110B, 110C, 111A, and 111B and a first detecting threshold (first threshold) are correlated with each other. Fig. 5 illustrates an example of the first detecting threshold table. In Fig. 5, the first detecting threshold of "100 kW" is indicated when only the electromagnetic valves 110A and 111A are closed.

The first leakage detector 96 detects the air leakage based on the power consumption of the compressor 10. In the case that the air leakage is generated, the power consumption of the compressor 10 increases because the excess compressed air needs to be generated. Therefore, the power consumption of the compressor 10 in the predetermined period in the state in which the air leakage is not generated is previously defined as the threshold, and compared to the actual power consumption in the predetermined period, which allows the air leakage to be detected.

Specifically, when receiving the detection starting instruction from the electromagnetic valve controller 94, the first leakage detector 96 calculates second integral power consumption in the predetermined period (for example, 30 minutes since the detection starting instruction is received) from the measured value of the power meter 11 installed in the compressor 10. The first leakage detector 96 checks the opening and closing information added to the detection starting instruction, and specifies a closed electromagnetic valve. The first leakage detector 96 reads the first detecting threshold corresponding to the combination information indicating the combination of the specified electromagnetic valves from the first detecting threshold table, and compares the read first detecting threshold to the second integral power consumption. In the case that the second integral power consumption is less than or equal to the first detecting threshold, the first leakage detector 96 determines that the air leakage is not generated. In the case that the second integral power consumption is greater than the first detecting threshold, the first leakage detector 96 determines that the air leakage is generated in the pipe line 30 (the pipe line 30 on the upstream side of the electromagnetic valve), which is specified based on the opening and closing information and excludes a portion on the downstream side (terminal side) from the closed electromagnetic valve, and the first leakage detector 96 outputs a determination result to the notification processing unit 99.

The electromagnetic valve-sensor correspondence table storage unit 97 stores an electromagnetic valve-sensor correspondence table therein. In the electromagnetic valve-sensor correspondence table, electromagnetic valve identification information identifying the electromagnetic valve and sensor identification information identifying the pressure sensor installed in the pipe line 30 on the downstream side of the electromagnetic valve are correlated with each other. Fig. 6 illustrates an example of the electromagnetic valve-sensor correspondence table. As illustrated in Fig. 6, for example, the electromagnetic valve 110A and the pressure sensor 120A installed on the downstream side of the electromagnetic valve 110A are correlated with each other.

The second leakage detector 98 detects the air leakage of the pipe line 30 based on the measured values of the pressure sensors 120A, 120B, 120C, 121A, and 121B installed in the pipe line 30 on the downstream side of the electromagnetic valves 110A, 110B, 110C, 111A, and 111B.

When receiving the detection starting instruction from the electromagnetic valve controller 94, the second leakage detector 98 sets one of the electromagnetic valves (that is, the electromagnetic valves closed this time) indicated by the closing target information added to the detection starting instruction to the detecting target electromagnetic valve. The second leakage detector 98 reads the sensor identification information corresponding to the electromagnetic valve identification information indicating the detecting target electromagnetic valve from the electromagnetic valve-sensor correspondence table. The second leakage detector 98 checks the measured value of the pressure sensor 120A (or 120B, 120C, 121A, or 121B) indicated by the read sensor identification information, and calculates an amount of change in measured value per unit time. In the case that the calculated amount of change is smaller than a previously-set second detecting threshold, the second leakage detector 98 determines that the air leakage is not generated. In the case that the calculated amount of change is larger than the second detecting threshold, the second leakage detector 98 determines that the air leakage is generated in the pipe line 30 on the downstream side of the detecting target electromagnetic valve, and outputs the determination result to the notification processing unit 99.

When receiving the determination result from the first leakage detector 96 or the second leakage detector 98, the notification processing unit 99 notifies a user of the determination result. Examples of a notification method include a method of displaying the determination result on a display device, a method of outputting the determination result by sound using a speaker, a method of turning on a warning lamp according to the determination result, and a method of transmitting information indicating the determination result to an external device.

The threshold setting unit 100 sets the first detecting threshold table stored in the first threshold storage unit 95. The threshold setting unit 100 may set the first detecting threshold according to the input of the user. The threshold setting unit 100 may update the first detecting threshold corresponding to the combination of the closed electromagnetic valves, which are specified by the opening and closing information, based on the second integral power consumption calculated by the first leakage detector 96.

For example, in an initial state in which the pipe line 30 is installed, the user inputs a proper value, and the threshold setting unit 100 sets the first detecting threshold according to the input of the user. Then, the operation is performed while properly changing the opening and closing combination of the electromagnetic valves 110A, 110B, 110C, 111A, and 111B, which allows the threshold setting unit 100 to set the first detecting threshold to various combinations using the second integral power consumption calculated by the first leakage detector 96. In the initial state, preferably the air leakage is checked by sound like in the conventional technique. Therefore, the power consumption in the state in which the air leakage is not generated is set to the first detecting threshold.

One of the following methods may be used as the method in which the threshold setting unit 100 updates the first detecting threshold using the second integral power consumption.

(a) In the case that the first leakage detector 96 determines that the air leakage is not generated, the first detecting threshold corresponding to the combination of the closed electromagnetic valves specified by the opening and closing information is updated using the second integral power consumption calculated by the first leakage detector 96.
(b) In the case that the first leakage detector 96 determines that the air leakage is not generated, the first detecting threshold corresponding to the combination of the closed electromagnetic valves specified by the opening and closing information is updated using a value in which a predetermined value is added to the second integral power consumption calculated by the first leakage detector 96. The predetermined value is smaller than an increase in power consumption generated by the air leakage, and is previously defined by taking account of a measurement error of the power consumption in the predetermined period of the compressor 10.
(c) The second integral power consumption in the state in which the first leakage detector 96 determines that the air leakage is not generated is accumulated by a predetermined number of times in the past or for a predetermined period in the past. In the case that the first leakage detector 96 determines that the air leakage is not generated, the first detecting threshold corresponding to the combination of the closed electromagnetic valves specified by the opening and closing information is updated using a typical value (such as a maximum value and an average value) of the accumulated second integral power consumption in the past or a value in which a predetermined value is added to the typical value.

The first detecting threshold is not updated in the case that the first leakage detector 96 determines that the air leakage is generated.

In the case (a), the previous second integral power consumption is set to the first detecting threshold. Therefore, in the case that the second integral power consumption is larger than the previous second integral power consumption, the first leakage detector 96 determines that the air leakage is generated, and the user is notified of the air leakage. At this point, the user can confirm whether the air leakage is actually generated when checking the pipe line, and the user can early discover the air leakage.

In the case (b), a value in which the predetermined value is added to the previous second integral power consumption is set to the first detecting threshold. Thus, the air leakage is not detected if the second integral power consumption increases slightly compared with the previous second integral power consumption by the measurement error of the power meter or the change in external environment. Therefore, the unnecessary notification of the air leakage can be prevented.

In the case (c), the typical value of the second integral power consumption in the past is set to the first detecting threshold. Therefore, the threshold can be set in consideration of a variation in second integral power consumption in the past.

### (Flow of air leakage detecting processing)

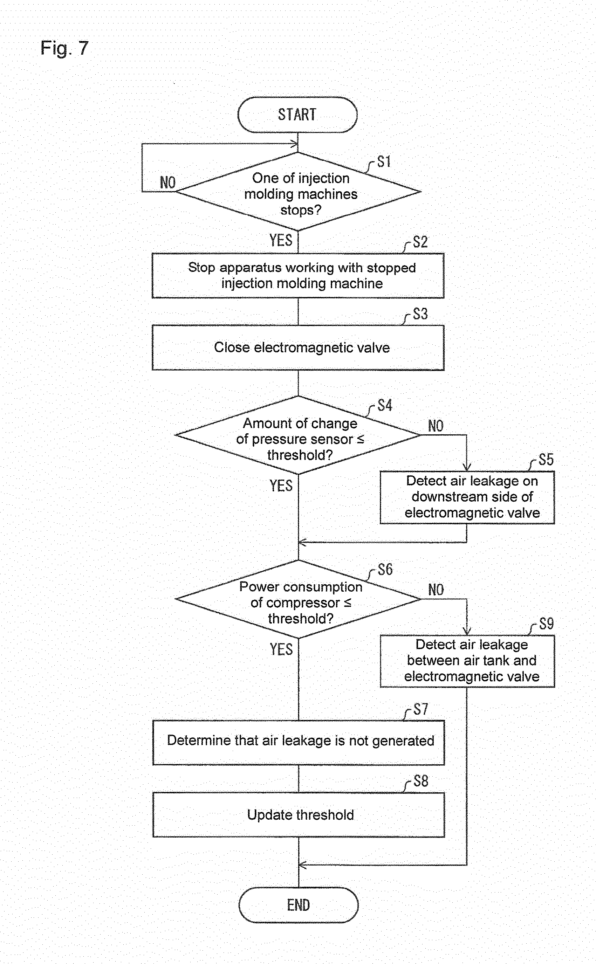

An example of air leakage detecting processing of the first embodiment will be described below with reference to Fig. 7. Fig. 7 is a flowchart illustrating the flow of the air leakage detecting processing of the first embodiment.

Based on the measured values of the power meters 41A and 41B installed in the injection molding machines 40A and 40B, the power-supply controller 92 and the electromagnetic valve controller 94 calculate the first integral power consumption in the predetermined period (for example, 5 minutes) in the past from the present clock time in each of the injection molding machines 40A and 40B. The power-supply controller 92 reads the stopping condition threshold corresponding to the injection molding machine 40A (or 40B) from the power-supply management table with respect to each of the injection molding machines 40A and 40B. The power-supply controller 92 determines whether the calculated first integral power consumption is less than or equal to the stopping condition threshold with respect to each of the injection molding machines 40A and 40B (S1). When the first integral power consumption is less than or equal to the stopping condition threshold, the power-supply controller 92 determines that the injection molding machine corresponding to the first integral power consumption stops.

When the first integral power consumption is less than or equal to the stopping condition threshold (YES in S1) the power-supply controller 92 determines that the injection molding machine corresponding to the first integral power consumption stops, and reads the control target information corresponding to the injection molding machine from the power-supply management table. The power-supply controller 92 switches the power supply of each apparatus (the air ejector, the take-out robot, the pallet changer, and the resin dryer) indicated by the control target information from on to off to stop the apparatus (S2). That is, the power-supply controller 92 can stop the air ejector 50A (or 50B), the take-out robot 60A (or 60B), the pallet changer 70A (or 70B), and the resin dryer 80A (or 80B), which work with the stopped injection molding machine 40A (or 40B).

Then the power-supply controller 92 outputs the monitoring target information corresponding to the first integral power consumption that is less than or equal to the stopping condition threshold to the electromagnetic valve controller 94. The electromagnetic valve controller 94 reads the electromagnetic valve identification information corresponding to the monitoring target information received from the power-supply controller 92 from the electromagnetic valve management table, and performs the closing control of the electromagnetic valve indicated by the read electromagnetic valve identification information (S3).

At this point, it is assumed that the injection molding machine 40A is determined to be stopped in S1, that the air ejector 50A, the take-out robot 60A, the pallet changer 70A, and the resin dryer 80A, which work with the injection molding machine 40A, are stopped in S2, and that the electromagnetic valves 110A and 111A are closed in S3. In this stage, it is also assumed that the electromagnetic valve 110C is already closed while the electromagnetic valves 110B and 111B are opened.

The electromagnetic valve controller 94 outputs the detection starting instruction to the first leakage detector 96 and the second leakage detector 98. The closing target information indicating the electromagnetic valves 110A and 111A to which the closing control is performed and the opening and closing information indicating that the electromagnetic valves 110A, 111A, and 110C are closed while the electromagnetic valves 110B and 111B are opened are added to the detection starting instruction.

The second leakage detector 98 sets each of the electromagnetic valves 110A and 111A indicated by the closing target information to the detecting target electromagnetic valve, and reads the sensor identification information corresponding to the electromagnetic valve identification information indicating the detecting target electromagnetic valve from the electromagnetic valve-sensor correspondence table. The second leakage detector 98 compares the amount of change in measured value per unit time of the pressure sensor 120A (or 121A) indicated by the sensor identification information to the second detecting threshold (S4).

When the amount of change of the pressure sensor 120A (or 121A) is less than or equal to the second detecting threshold (YES in S4), the second leakage detector 98 determines that the air leakage is not generated, and transfers to the processing in S6. In the case that the air leakage is not generated in the pipe line 30 on the downstream side of the electromagnetic valve 110A, the closing of the electromagnetic valve 110A eliminates inflow and outflow of the air in the pipe line 30. Therefore, there is no change in the measured value of the pressure sensor 120A installed in the pipe line 30 on the downstream side of the electromagnetic valve 110A. Consequently, the air leakage is determined not to be generated in the case that the amount of change of the pressure sensor 120A is less than or equal to the second detecting threshold. The same holds true for the electromagnetic valve 111A.

On the other hand, when the amount of change of the pressure sensor 120A (or 121A) is greater than the second detecting threshold (NO in S4), the second leakage detector 98 determines that the air leakage is generated in the pipe line 30 on the downstream side of the detecting target electromagnetic valve, and outputs the determination result to the notification processing unit 99 (S5). For example, it is assumed that the air leakage is generated in the pipe line 30 on the downstream side of the electromagnetic valve 110A. In this case, when the electromagnetic valve 110A is closed, the outflow of the air to the outside is generated in the pipe line 30 on the downstream side of the electromagnetic valve 110A. The measured value of the pressure sensor 120A installed in the pipe line 30 on the downstream side of the electromagnetic valve 110A decreases largely, and the amount of change of the pressure sensor 120A increases. Therefore, in the case that the amount of change of the pressure sensor 120A is larger than the second detecting threshold, the second leakage detector 98 can determine that the air leakage is generated in the pipe line 30 on the downstream side of the electromagnetic valve 110A that is of the detecting target electromagnetic valve corresponding to the pressure sensor 120A.

When receiving the detection starting instruction from the electromagnetic valve controller 94, the first leakage detector 96 calculates the second integral power consumption in the predetermined period (for example, for 30 minutes since the detection starting instruction is received) from the measured value of the power meter 11 installed in the compressor 10. The first leakage detector 96 specifies the combination of the closed electromagnetic valves 110A, 110C, and 111A based on the opening and closing information, and reads the first detecting threshold corresponding to the combination information indicating the combination of the specified electromagnetic valves from the first detecting threshold table. Then the first leakage detector 96 compares the first detecting threshold to the second integral power consumption (S6).

When the second integral power consumption is less than or equal to the first detecting threshold (YES in S6), the first leakage detector 96 determines that the air leakage is not generated (S7). Then the threshold setting unit 100 performs first detecting threshold update processing (S8).

On the other hand, when the second integral power consumption is greater than the first detecting threshold (NO in S6), the first leakage detector 96 determines that the air leakage is generated in the pipe line 30 excluding the portion on the downstream side of the closed electromagnetic valve specified based on the opening and closing information, and the first leakage detector 96 outputs the determination result to the notification processing unit 99 (S9). At this point, the first leakage detector 96 notifies the notification processing unit 99 that the air leakage is generated in the pipe line 30 excluding the portions on the downstream sides of the electromagnetic valves 110A, 110C, and 111A. Then the processing is ended.

In the case that the air leakage is generated, the compressor 10 needs to operate unnecessarily by an amount of air leakage, and the power consumption increases. On the other hand, in the case that the air leakage is not generated, the power consumption of the compressor 10 is kept substantially constant.

Therefore, the determination that the air leakage is not generated can be made in the case that the second integral power consumption is less than or equal to the first detecting threshold. On the other hand, the determination that the air leakage is generated in the pipe line excluding the portion on the downstream side of the closed electromagnetic valve is made in the case that the second integral power consumption is greater than the first detecting threshold.

Thus, the first leakage detector 96 can simply be detect the air leakage by comparing the second integral power consumption of the compressor 10 that is of the air supplying apparatus to the first detecting threshold.

In making the determination that the air leakage is not generated, the threshold setting unit 100 updates the first detecting threshold. The pieces of processing in S2 to S9 are repeated every time one of the injection molding machines 40A and 40B stops. Frequently one of the injection molding machines 40A and 40B stops due to a breakdown, an ending time, and an arrangement waiting state, so that the first detecting threshold can early be set with high accuracy. The processing in S8 may be eliminated in a stage in which the first detecting threshold can be set with a certain degree of accuracy. The processing in S8 may be resumed at the time the pipe line is extended.

The detecting apparatus 90 of the first embodiment detects the air leakage in the system including the air ejectors (fluid use apparatus) 50A and 50B in which the compressed air (fluid) is used, the take-out robots (fluid use apparatus) 60A and 60B, the pallet changers (fluid use apparatus) 70A and 70B, the resin dryers (fluid use apparatus) 80A and 80B, and the compressor (fluid supply apparatus) 10 that supplies the compressed air to the compressed air use apparatus. The detecting apparatus 90 includes the first leakage detector 96 that detects the existence or non-existence of the air leakage based on the power consumption of the compressor 10.

In the case that the air leakage is generated, because the compressor 10 needs to unnecessarily supply the compressed air by the amount of air leakage, the power consumption of the compressor 10 changes according to the existence or non-existence of the air leakage. Therefore, as described above, the existence or non-existence of the air leakage can be detected based on the power consumption of the compressor 10. In this case, based on not the sound but the power consumption unlike in the conventional technique, the fluid leakage can simply be detected even if a noise such as a vibration sound exists. Additionally, cost reduction can be achieved because many pressure sensors are not required.

The first leakage detector 96 detects the generation of the air leakage in the case that the power consumption of the compressor 10 is greater than or equal to the first detecting threshold. For example, the electromagnetic valve 110A is provided in the pipe line 30, and the first leakage detector 96 detects the generation of the fluid leakage in the pipe line 30 on the upstream side of the electromagnetic valve 110A in the case that the power consumption of the compressor 10 is greater than or equal to the first detecting threshold after the electromagnetic valve 110A is closed. Therefore, the air leakage can simply be detected in the pipe line 30 on the upstream side of the electromagnetic valve 110A, which is of a part of the pipe line 30.

### <Second Embodiment>

In the first embodiment, using the pressure sensors 120A, 120B, 120C, 121A, and 121B, the air leakage is detected in the pipe line 30 on the downstream sides of the electromagnetic valves 110A, 110B, 110C, 111A, and 111B. Alternatively, based on the power consumption of the compressor 10, the air leakage may be detected in the pipe line on the downstream sides of the electromagnetic valves 110A, 110B, 110C, 111A, and 111B. In a second embodiment, with no use of the pressure sensors 120A, 120B, 120C, 121A, and 121B, the air leakage is detected in the pipe line on the downstream sides of the electromagnetic valves 110A, 110B, 110C, 111A, and 111B based on the power consumption of the compressor 10.

The system configuration of the second embodiment is similar to that in Fig. 1. However, the pressure sensors 120A, 120B, 120C, 121A, and 121B in Fig. 1 may be eliminated.

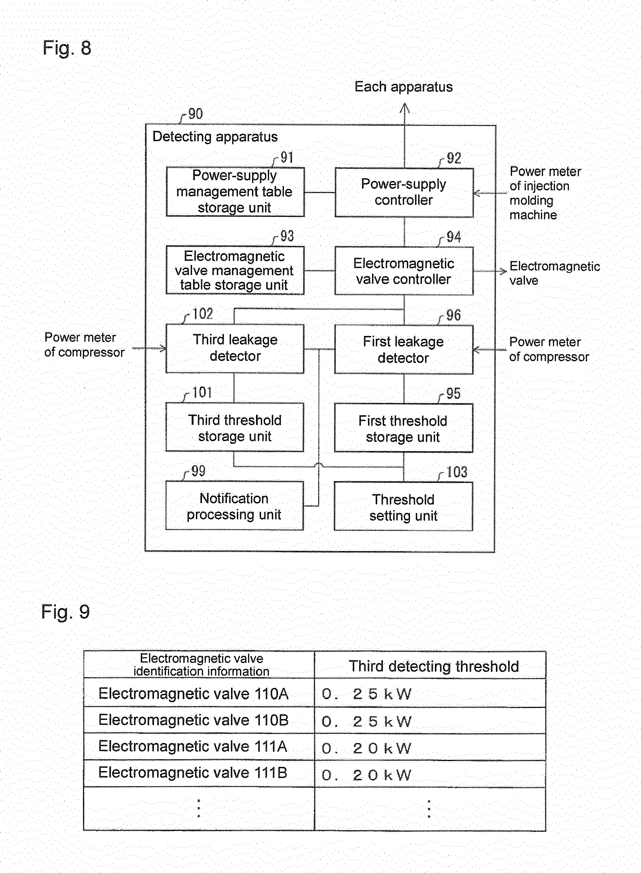

Fig. 8 is a diagram illustrating a configuration of a detecting apparatus of the second embodiment. As illustrated in Fig. 8, the detecting apparatus 90 of the second embodiment differs from the detecting apparatus in Fig. 2 in that the detecting apparatus 90 of the second embodiment includes a third threshold storage unit 101, a third leakage detector 102, and a threshold setting unit 103 instead of the second leakage detector 98, the electromagnetic valve-sensor correspondence table storage unit 97, and the threshold setting unit 100. Because other configurations are similar to those of the first embodiment, the description is neglected.

In the second embodiment, the electromagnetic valve controller 94 outputs the detection starting instruction to the first leakage detector 96 and the third leakage detector 102.

The third threshold storage unit 101 stores a third detecting threshold (second threshold) therein. The third detecting threshold is set in each of the electromagnetic valves 110A, 110B, 110C, 111A, and 111B. At this point, the third detecting threshold is set to a standard value of the amount of change in power consumption of the compressor 10. The standard value of the amount of change in power consumption of the compressor 10 is obtained by a difference between before and after the closing of the electromagnetic valve when the air leakage is not generated on the downstream side of the electromagnetic valve concerned. Fig. 9 illustrates a storage example of the third threshold storage unit.

The third leakage detector 102 detects the air leakage in the pipe line on the downstream side of the closed electromagnetic valve based on the difference in power consumption of the compressor 10 between before and after the closing of the electromagnetic valves 110A, 110B, 110C, 111A, and 111B. The power consumption of the compressor 10 increases in the case that the air leakage is generated in the pipe line 30 because the compressor 10 needs to generate the excess compressed air. Accordingly, in the case that the air leakage is generated on the downstream side of one of the electromagnetic valves 110A, 110B, 110C, 111A, and 111B, the difference in power consumption of the compressor 10 between before and after the closing of the electromagnetic valve increases compared with the case that the air leakage is not generated. Therefore, the air leakage can be detected by comparing the difference in power consumption of the compressor 10 between before and after the closing of the electromagnetic valve to the third detecting threshold.

Specifically, when receiving the detection starting instruction from the electromagnetic valve controller 94, the third leakage detector 102 calculates the difference (closing before-after difference) between the integral power consumption in the predetermined period (for example, 30 minutes) before the reception of the detection starting instruction and the integral power consumption in the predetermined period (for example, 30 minutes) after the reception of the detection starting instruction based on the measured value of the power meter 11 installed in the compressor 10. The third leakage detector 102 accumulates the measured value in each unit time of the power meter 11 for a given period in the past. Therefore, the third leakage detector 102 can calculate the integral power consumption of the predetermined period (for example, 30 minutes) before the reception of the detection starting instruction.

The third leakage detector 102 sets one of the electromagnetic valves (that is, the electromagnetic valve closed this time) indicated by the closing target information added to the detection starting instruction to the detecting target electromagnetic valve, and reads the third detecting threshold corresponding to the detecting target electromagnetic valve from the third threshold storage unit 101.

The third leakage detector 102 compares the calculated closing before-after difference to the third detecting threshold. In the case that the closing before-after difference is less than or equal to the third detecting threshold, the third leakage detector 102 determines that the air leakage is not generated. In the case that the closing before-after difference is greater than the third detecting threshold, the third leakage detector 102 determines that the air leakage is not generated in the pipe line on the downstream side of the detecting target electromagnetic valve, and outputs the determination result to the notification processing unit 99.

The threshold setting unit 103 has a third detecting threshold setting function in addition to the first detecting threshold setting function similar to that in the first embodiment. The threshold setting unit 103 may set the third detecting threshold according to the input of the user. The threshold setting unit 103 may update the third detecting threshold corresponding to the electromagnetic valve indicated by the closing target information based on the closing before-after difference calculated by the third leakage detector 102.

For example, in the initial state in which the pipe line 30 is installed, the user inputs a proper value, and the threshold setting unit 103 sets the third detecting threshold according to the input of the user. Then, the operation is performed while the opening and closing combination of the electromagnetic valves, which allows the threshold setting unit 103 to set the third detecting threshold to each electromagnetic valve using the closing before-after difference calculated by the third leakage detector 102. In the initial state, preferably the air leakage is checked by sound like in the conventional technique. Therefore, the closing before-after difference in the state in which the air leakage is not generated is set to the third detecting threshold.

One of the following methods may be used as the method in which the threshold setting unit 103 updates the third detecting threshold.

(a) In the case that the third leakage detector 102 determines that the air leakage is not generated, the third detecting threshold corresponding to the detecting target electromagnetic valve indicated by the closing target information is updated using the closing before-after difference calculated by the third leakage detector 102.
(b) In the case that the third leakage detector 102 determines that the air leakage is not generated, the third detecting threshold corresponding to the detecting target electromagnetic valve indicated by the closing target information is updated using a value in which a predetermined value is added to the closing before-after difference calculated by the third leakage detector 102. The predetermined value is smaller than an increase in power consumption generated by the air leakage, and is previously defined by taking account of the measurement error of the power consumption of the compressor.
(c) The closing before-after difference in the state in which the third leakage detector 102 determines that the air leakage is not generated is accumulated by a predetermined number of times in the past or for a predetermined period in the past. In the case that the third leakage detector 102 determines that the air leakage is not generated, the third detecting threshold corresponding to the detecting target electromagnetic valve indicated by the closing target information is updated using a typical value (such as a maximum value and an average value) of the accumulated closing before-after difference in the past or a value in which a predetermined value is added to the typical value.

The third detecting threshold is not updated in the case that the third leakage detector 102 determines that the air leakage is generated.

### (Flow of air leakage detecting processing)

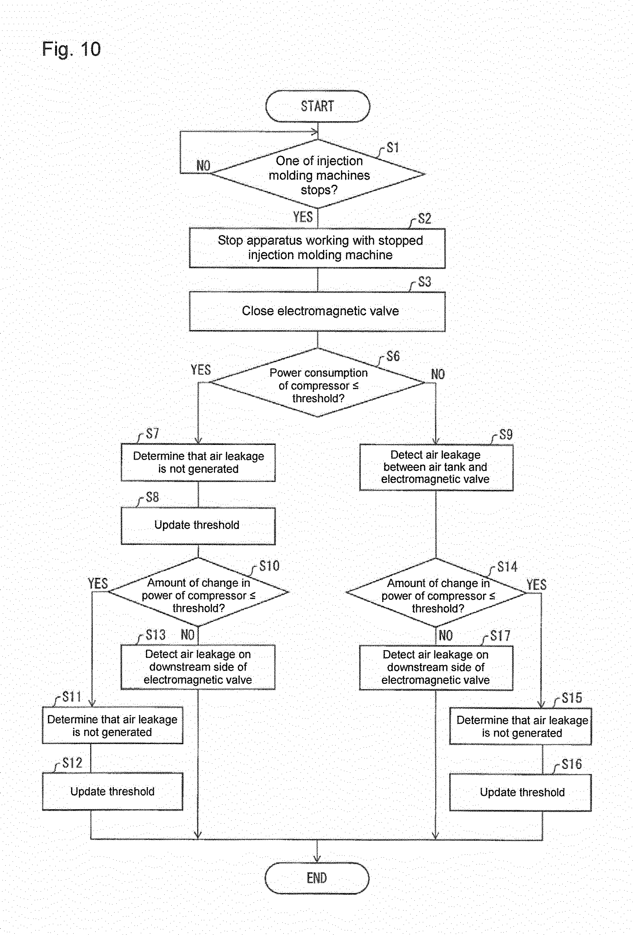

An example of the air leakage detecting processing of the second embodiment will be described with reference to Fig. 10. Fig. 10 is a flowchart illustrating the flow of the air leakage detecting processing of the second embodiment. The same content as the processing of the flowchart in Fig. 7 is designated by the same step number, and the description is neglected.

As illustrated in Fig. 10, the pieces of processing in S1 to S3 and S6 to S9 are similar to those in Fig. 1. When the processing in S8 is ended, the third leakage detector 102 calculates the difference (closing before-after difference) in the integral power consumption in the predetermined period (for example, 30 minutes) between before and after the reception of the detection starting instruction based on the measured value of the power meter 11 installed in the compressor 10. The third leakage detector 102 reads the third detecting threshold corresponding to the detecting target electromagnetic valve indicated by the closing target information added to the detection starting instruction from the third threshold storage unit 101. The third leakage detector 102 compares the calculated closing before-after difference to the third detecting threshold (S10).

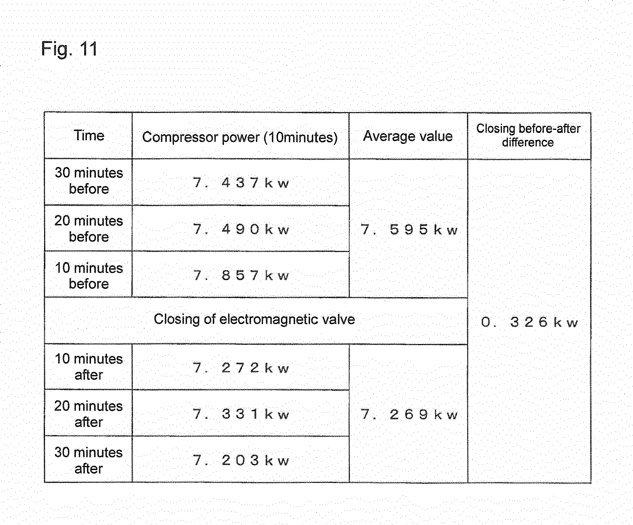

For example, it is assumed that the power meter of the compressor measures the electric energy in Fig. 11. The third leakage detector 102 calculates the closing before-after difference of 0.326 kW based on the measurement result of the power meter as illustrated in Fig. 11.

When the closing before-after difference is less than or equal to the third detecting threshold (YES in S10), the third leakage detector 102 determines that the air leakage is not generated (S11). Then the threshold setting unit 103 performs the third detecting threshold update processing (S12).

When the closing before-after difference is greater than the third detecting threshold (NO in S10), the third leakage detector 102 determines that the air leakage is generated in the pipe line on the downstream side of the detecting target electromagnetic valve, and outputs the determination result to the notification processing unit 99 (S13). The notification processing unit 99 notifies the user that the air leakage is generated in the pipe line on the downstream side of the detecting target electromagnetic valve. Then the processing is ended.

On the other hand, the pieces of processing in S14 to S17 similar to the pieces of processing in S10 to S13 are performed after the processing in S9.

When the detecting target electromagnetic valve is closed, the consumption of the air is eliminated in the pipe line on the downstream side of the detecting target electromagnetic valve. When the air leakage is generated in the pipe line 30 on the downstream side of the detecting target electromagnetic valve, the consumed amount of air that is eliminated by the closing of the detecting target electromagnetic valve includes the amount of air leakage in addition to the consumed amount of air in the compressed air use apparatus connected to the pipe line 30 on the downstream side of the detecting target electromagnetic valve. Therefore, with respect to before and after the closing of the detecting target electromagnetic valve, the power consumption is decreased additionally by the amount of air leakage. Accordingly, the air leakage can be detected in the pipe line 30 on the downstream side of the detecting target electromagnetic valve by comparing the closing before-after difference to the third detecting threshold.

For example, as illustrated in Fig. 11, it is assumed that the closing before-after difference of 0.326 kW is calculated by the third leakage detector 102 when the electromagnetic valve 110A is closed. On the other hand, it is assumed that the third detecting threshold of 0.280 kW is set with respect to the electromagnetic valve 110A. The third detecting threshold of 0.280 kW is set based on the closing before-after difference obtained when the electromagnetic valve 110A is closed while the air leakage is not generated. In this case, because the calculated closing before-after difference is larger than the third detecting threshold, the compressor 10 unnecessarily consumes the power by the amount of air leakage before the electromagnetic valve 110A is closed. Therefore, the third leakage detector 102 can detect that the air leakage is generated in the pipe line 30 on the downstream side of the electromagnetic valve 110A.

In determining that the air leakage is not generated, the threshold setting unit 103 updates the third detecting threshold. The pieces of processing in S10 to S17 are repeated every time one of the injection molding machines 40A and 40B stops. Frequently one of the injection molding machines 40A and 40B stops due to the breakdown, the ending time, and the arrangement waiting state, so that the third detecting threshold can early be set with high accuracy. The pieces of processing in S12 and S16 may be eliminated in the stage in which the third detecting threshold can be set with a certain degree of accuracy. The pieces of processing in S12 and S16 may be resumed at the time the pipe line is extended.

In the above description, the third leakage detector 102 calculates the closing before-after difference that is of the difference between the integral power consumption of the compressor 10 in the predetermined period (for example, 30 minutes) before the reception of the detection starting instruction and the integral power consumption of the compressor 10 in the predetermined period (for example, 30 minutes) after the reception of the detection starting instruction.

Alternatively, instead of the closing before-after difference, the third leakage detector 102 may calculate a ratio (closing before-after ratio) of the integral power consumption of the compressor 10 in the predetermined period (for example, 30 minutes) after the reception of the detection starting instruction to the integral power consumption of the compressor 10 in the predetermined period (for example, 30 minutes) before the reception of the detection starting instruction. Assuming that the air leakage is generated on the downstream side of the electromagnetic valve 110A, the closing before-after ratio between before and after the closing of the electromagnetic valve 110A decreases relative to that in the case that the air leakage is not generated. Therefore, the third leakage detector 102 may compare the calculated closing before-after ratio to the third detecting threshold (third threshold), and determine that the air leakage is generated when the calculated closing before-after ratio is less than or equal to the third detecting threshold.

Thus, the third leakage detector 102 may calculate the first feature quantity, such as the closing before-after difference and the closing before-after ratio, which indicates a mutual relationship between the integral power consumption of the compressor 10 before the closing of the electromagnetic valve and the integral power consumption of the compressor 10 after the closing of the electromagnetic valve, and the third leakage detector 102 may detect the air leakage by comparing the first feature quantity to the third detecting threshold.

### <Modifications>

### (First modification)

In the above description, the threshold setting units 100 and 103 do not perform the setting of the threshold in the case that the air leakage is detected. Alternatively, the threshold setting units 100 and 103 may perform the following processing in the case that the air leakage is detected.

In the case that the first leakage detector 96 or the third leakage detector 102 detects that the air leakage is generated, the threshold setting units 100 and 103 encourage the user to input the instruction whether the threshold is to be updated. Only when the instruction to update the threshold is input, the first detecting threshold or the third detecting threshold is updated by the same method as one of the methods (a) to (c).

Sometimes the pipe line 30 for the compressed air is also extended according to the extension of the production line. In such cases, there is a high possibility that, due to the extended pipe line 30, the power consumption of the compressor 10 increases even if the air leakage is not generated. Therefore, if the air leakage is mistakenly detected due to the extended pipe line 30, the user can input the instruction to update the threshold, and set the threshold based on the power consumption of the post-extension pipe line 30.

### (Second modification)

In the first and second embodiments, the air leakage is detected by setting the threshold based on the power consumption in the state in which the air leakage is not generated. Therefore, in the initial state in which the pipe line 30 is installed, preferably the threshold is set while occasionally checking that the air leakage is not generated. However, there is a high possibility that the threshold is unfortunately set based on the power consumption during the generation of the air leakage due to a lack of checking of the air leakage by sound or the pressure sensor in the initial state.

As described above, in the modification in which the threshold is updated depending on the user input for the threshold update even when the air leakage is detected, it is conceivable that the user mistakenly updates the threshold without noticing the air leakage. In this case, the threshold is set based on the power consumption during the generation of the air leakage.

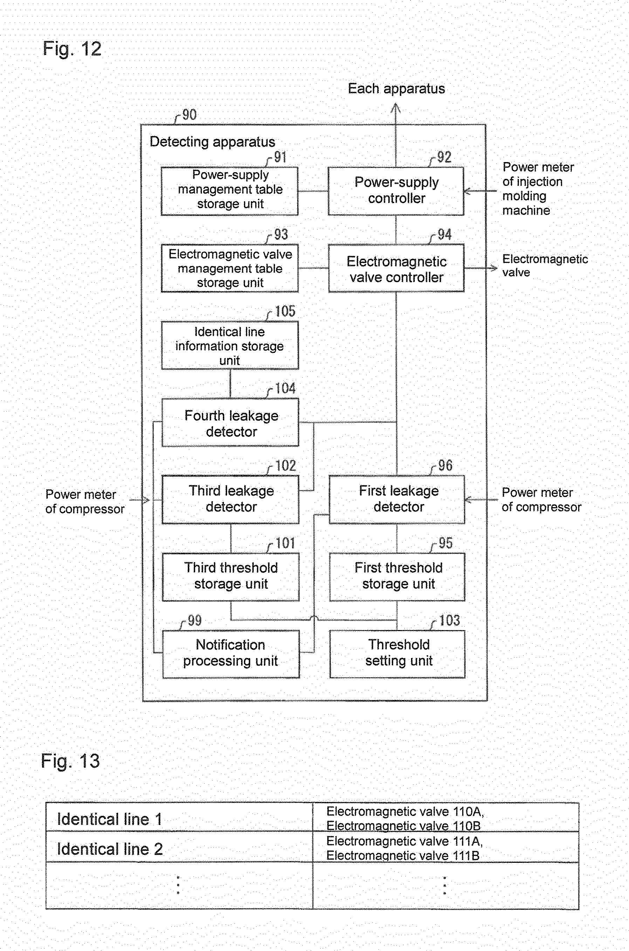

As described above, when the threshold is set based on the power consumption during the generation of the air leakage, there is a possibility that the air leakage cannot properly be detected after the setting. In order to solve the problem, the detecting apparatus 90 may include a fourth leakage detector 104 and an identical line information storage unit 105 as illustrated in Fig. 12.

The identical line information storage unit 105 stores identical line information therein. The electromagnetic valve identification information indicating the electromagnetic valves having the substantially identical state of the pipe line 30 on the downstream side (terminal side) is correlated with the identical line information. For example, in the production line in Fig. 1, the term "the electromagnetic valves having the identical state of the pipe line on the downstream side" means the electromagnetic valves 110A and 110B to which the injection molding machines 40A and 40B, the air ejectors 50A and 50B, the take-out robots 60A and 60B, and the pallet changers 70A and 70B are connected while any components of the same kind are separated from electromagnetic valves 110A and 110B by a substantially identical distance in the pipe line 30. Fig. 13 illustrates a storage example of the identical line information storage unit.

For the electromagnetic valves 110A and 110B having the identical state of the pipe line 30 on the downstream side, the amounts of air consumed by the apparatuses on the downstream side of the electromagnetic valves 110A and 110B are substantially identical unless the air leakage is generated. Therefore, the electromagnetic valves 110A and 110B having the identical state of the pipe line 30 on the downstream side are substantially identical to each other in the difference in power consumption of the compressor 10 between before and after the closing of the electromagnetic valve. However, the difference in power consumption of the compressor 10 between before and after the closing of the electromagnetic valve increases relatively in the case that the air leakage is generated in the pipe line 30 on the downstream side of one of the electromagnetic valves 110A and 110B. This is because the compressor 10 needs to operate unnecessarily by the amount of air leakage before the closing of the electromagnetic valve.

The fourth leakage detector 104 acquires the latest closing before-after difference calculated by the third leakage detector 102 with respect to each of the plurality of electromagnetic valves corresponding to the pieces of identical line information stored in the identical line information storage unit 105. The fourth leakage detector 104 sets the average value (or minimum value) of the acquired closing before-after differences to a reference value, and compares the reference value to each of the closing before-after differences. In the case that the closing before-after difference is greater than or equal to a predetermined value from the reference value, the fourth leakage detector 104 determines that the air leakage is generated in the pipe line 30 on the downstream side of the electromagnetic valve corresponding to the closing before-after difference, and notifies the notification processing unit 99 of the determination result.

Alternatively, the fourth leakage detector 104 may read the third detecting threshold from the third threshold storage unit 101 with respect to each of the plurality of electromagnetic valves corresponding to the pieces of identical line information stored in the identical line information storage unit 105. The fourth leakage detector 104 sets the average value (or minimum value) of the acquired third detecting thresholds to the reference value, and compares the reference value to each of the third detecting thresholds. In the case that the third detecting threshold is greater than or equal to a predetermined value from the reference value, the fourth leakage detector 104 may determine that the air leakage is generated in the pipe line 30 on the downstream side of the electromagnetic valve corresponding to the third detecting threshold.

The fourth leakage detector 104 may perform the detecting processing in predetermined timing. For example, the fourth leakage detector 104 may perform the detecting processing in timing when the electromagnetic valve controller 94 outputs the detection starting instruction to the first leakage detector 96 and the third leakage detector 102, or timing of a given cycle (for example, once a day).

According to the second modification, (1) the fourth leakage detector 104 obtains the closing before-after difference of the power consumption of the compressor 10 between before and after the closing of each of the electromagnetic valves 110A and 110B provided between the injection molding machine concerned and the branch portion 31 of the pipe line 30, and (2) the fourth leakage detector 104 detects the existence or non-existence of the air leakage in the pipe line on the downstream sides of the electromagnetic valves 110A and 110B based on the closing before-after difference obtained with respect to each of the injection molding machines 40A and 40B. Therefore, the air leakage can simply be detected.

### (Others)

In the above description, the air flows through the pipe line 30. However, the fluid flowing through the pipe line 30 is not limited to the air. Inert gases, such as nitrogen and argon, which are of gases except the air may be used as the fluid flowing through the pipe line 30. Liquids such as water may also be used.

The present invention is not limited to the above embodiments, but various changes can be made as long as these changes are within the scope of the claims.

Each unit of the detecting apparatus 90 of the embodiments can be constructed in a manner such that a computing unit such as a CPU (Central Processing Unit) controls an input unit such as a keyboard, an output unit such as a display, and a communication unit such as an interface circuit by executing a program stored in a storage unit such as a ROM (Read Only Memory) and a RAM (Random Access Memory). Accordingly, only the computer including these units reads a recording medium in which the program is recorded and executes the program, which allows various functions and pieces of processing of the detecting apparatus 90 of the embodiments to be implemented and performed. The functions and pieces of processing can be implemented and performed on any computer by recording the program in the removable recording medium.

The recording medium may be a memory (not illustrated), such as the ROM, which is used in the processing performed by a microcomputer. The recording medium may also be a program medium that can be read by inserting the recording medium in a program reading device (not illustrated) that is of an external storage device.

In each case, preferably the microprocessor accesses and executes the stored program. Preferably the microprocessor reads the program, downloads the program in a program storage area, and executes the program. It is assumed that the program to be downloaded is previously stored in a main body device.

The program medium is the recording medium configured to be able to separate from the main body device and to fixedly support the program. Examples of the recording medium include tape systems such as a magnetic tape and a cassette tape, disk systems such as a magnetic disk such as a flexible disk and a hard disk and a disk such as a CD, a MO, an MD, and a DVD, card systems such as an IC card (including a memory card), and semiconductor memories such as a mask ROM, an EPROM (Erasable Programmable Read Only Memory), an EEPROM (Electrically Erasable Programmable Read Only Memory), and a flash ROM.

In any system configuration to which a communication network including the Internet can be connected, preferably the recording medium supports the program in a fluid manner such that the program is downloaded through the communication network.

In the case that the program is downloaded through the communication network, preferably the program to be downloaded is previously stored in the main body device, or installed from another recording medium.

As described above, the detecting apparatus of the present invention is configured to detect the fluid leakage in the system including the fluid use apparatus configured to use the fluid and the fluid supply apparatus configured to supply the fluid to the fluid use apparatus, the detecting apparatus includes the detector configured to detect the existence or non-existence of the fluid leakage in the system based on the power consumption of the fluid supply apparatus.

According to the configuration, the existence or non-existence of the fluid leakage is detected in the system based on the power consumption of the fluid supply apparatus. In the case that the fluid leakage is generated, because the fluid supply apparatus needs to unnecessarily supply the fluid by the amount of fluid leakage, the power consumption of the fluid supply apparatus changes according to the existence or non-existence of the fluid leakage. Therefore, as described above, the existence or non-existence of the fluid leakage can be detected based on the power consumption of the fluid supply apparatus. In this case, based on not the sound but the power consumption unlike in the conventional technique, the fluid leakage can simply be detected even if the noise such as the vibration sound exists. Additionally, the cost reduction can be achieved because many pressure sensors are not required.

Thus, according to the present invention, the detecting apparatus that simply detects the fluid leakage at low cost can be constructed.

In the detecting apparatus of the present invention, preferably the detector detects that the fluid leakage is generated when the power consumption of the fluid supply apparatus is greater than or equal to the first threshold.

According to the configuration, the fluid leakage can simply be detected by comparing the power consumption of the fluid supply apparatus to the first threshold.

In the detecting apparatus of the present invention, preferably the valve is provided in the pipe line through which the fluid flows to the fluid use apparatus, and the detector detects that the fluid leakage is generated in the pipe line on the upstream side of the valve when the power consumption of the fluid supply apparatus is greater than or equal to the first threshold after the valve is closed.

According to the configuration, the fluid leakage can simply be detected in the pipe line on the upstream side of the valve, which is a part of the pipe line.

In the detecting apparatus of the present invention, preferably the valve is provided in the pipe line through which the fluid flows to the fluid use apparatus, and the detector detects that the fluid leakage is generated in the pipe line on the downstream side of the valve based on the first feature quantity indicating the mutual relationship between the power consumption of the fluid supply apparatus before the closing of the valve and the power consumption of the fluid supply apparatus after the closing of the valve.

For example, the detector may calculate the difference between the power consumption of the fluid supply apparatus before the closing of the valve and the power consumption of the fluid supply apparatus after the closing of the valve as the first feature quantity, and detect that the fluid leakage is generated in the pipe line on the downstream side of the valve when the calculated difference is greater than or equal to the second threshold.

Alternatively, the detector may calculate a ratio of the power consumption of the fluid supply apparatus after the closing of the valve to the power consumption of the fluid supply apparatus before the closing of the valve as the first feature quantity, and detect that the fluid leakage is generated in the pipe line on the downstream side of the valve when the calculated ratio is less than or equal to a third threshold.

According to the configuration, the generation of the fluid leakage is detected in the pipe line on the downstream side of the valve based on the first feature quantity indicating the mutual relationship between the power consumption of the fluid supply apparatus before the closing of the valve and the power consumption of the fluid supply apparatus after the closing of the valve. In the case that the fluid leakage is generated in the pipe line on the downstream side of the valve, the fluid needs to be unnecessarily supplied by the amount of fluid leakage before the closing of the valve, and the power consumption of the fluid supply apparatus increases. Therefore, the first feature quantity changes according to the existence or non-existence of the fluid leakage in the pipe line on the downstream side of the valve. As a result, by using the first feature quantity, the fluid leakage can be simply detected in the pipe line on the downstream side of the valve.

The detecting apparatus of the present invention may further include the controller configured to close the valve located on the upstream side of the fluid use apparatus when the operation of the fluid use apparatus is stopped.

In the detecting apparatus of the present invention, the fluid use apparatus may be provided in plural, the pipe line may be branched so as to be connected to each of the plurality of fluid use apparatuses, the valve may be provided between each of the plurality of fluid use apparatuses and the branch point of the pipe line, and the controller may close the valve provided between the fluid use apparatus and the branch point of the pipe line when the operation of the fluid use apparatus is stopped.

In the detecting apparatus of the present invention, the fluid use apparatus may work with another main apparatus, and the controller may stop the operation of the fluid use apparatus working with the other main apparatus when detecting that the operation of the other main apparatus is stopped.

Therefore, the valve closing control can automatically be performed. The fluid leakage detecting processing can be performed in the timing of automatic closing of the valve. In other words, the fluid leakage detecting processing can be performed in the timing of stopping the operation of the fluid use apparatus. The operation of the fluid use apparatus stops due to the breakdown or maintenance in addition to normal stopping processing. Therefore, the fluid leakage detecting processing can frequently be performed, and the fluid leakage can be prevented from being left for a long term.

In the detecting apparatus of the present invention, the fluid use apparatus may be provided in plural, the pipe line through which the fluid flows to the fluid use apparatus may be branched so as to be connected to each of the plurality of fluid use apparatuses, the valve may be provided between each of the plurality of fluid use apparatuses and the branch point of the pipe line, and the detector may (1) obtain an amount of change in power consumption of the fluid supply apparatus between before and after closing of the valve provided between each of the plurality of fluid use apparatuses and the branch point of the pipe line, and (2) detect the existence or non-existence of the fluid leakage in the pipe line on the downstream side of the valve provided between each of the plurality of fluid use apparatuses and the branch point of the pipe line based on a mutual relationship between the amounts of change obtained for the plurality of fluid use apparatuses.

In the detecting apparatus of the present invention, the valve may be the electromagnetic valve. The fluid may be the gas, and the fluid supply apparatus may be the compressor configured to generate compressed gas.

The detecting apparatus of the present invention includes the detector configured to detect the existence or non-existence of the fluid leakage based on the power consumption of a fluid supply apparatus.

According to the configuration, the detecting apparatus that simply detects the fluid leakage at low cost can be constructed.

The detecting apparatus may be constructed with a computer. In this case, the present invention also includes a program that causes the computer to act as each unit of the control device and a computer-readable recording medium in which the program is recorded.

### INDUSTRIAL APPLICABILITY

For example, the present invention can be applied to the system that supplies the compressed air to the production apparatus through the pipe line.

### DESCRIPTION OF SYMBOLS

- 1: detecting system
- 10: compressor (fluid supply apparatus)
- 11: power meter
- 30: pipe line
- 31: branch portion (branch point)
- 40A: injection molding machine
- 40A, 40B: injection molding machine (fluid use apparatus)
- 41: A power meter
- 41A, 41B: power meter
- 50A, 50B: air ejector (fluid use apparatus)
- 60A, 60B: take-out robot (fluid use apparatus)
- 70A, 70B: pallet changer (fluid use apparatus)
- 80A, 80B: resin dryer (fluid use apparatus)
- 90: detecting apparatus
- 92: power-supply controller (controller)
- 94: electromagnetic valve controller (controller)
- 95: first threshold storage unit
- 96: first leakage detector (detector)
- 101: third threshold storage unit
- 102: third leakage detector (detector)
- 104: fourth leakage detector (detector)
- 110A, 110B, 110C, 111A, 111B: electromagnetic valve

## Claims

1. A detecting apparatus (90), configured to detect a fluid leakage in a system (1) comprising a fluid use apparatus (40A, 40B, 50A, 50B, 60A, 60B, 70A, 70B, 80A, 80B) configured to use a fluid and a fluid supply apparatus (10) configured to supply the fluid to the fluid use apparatus (40A, 40B, 50A, 50B, 60A, 60B, 70A, 70B, 80A, 80B),
wherein
a detector is configured to detect the fluid leakage in the system (1) based on power consumption of the fluid supply apparatus (10),
a valve (110A, 110B, 110C, 111A, 111B) being provided in a pipe line (30) through which the fluid flows to the fluid use apparatus (40A, 40B, 50A, 50B, 60A, 60B, 70A, 70B, 80A, 80B), and the detecting apparatus further comprising a controller (92, 94) configured to close the valve (110A, 110, 110C, 111A, 111B) located on the upstream side of the fluid use apparatus (40A, 40B, 50A, 50B, 60A, 60B, 70A, 70B, 80A, 80B) when an operation of the fluid use apparatus (40A, 40B, 50A, 50B, 60A, 60B, 70A, 70B, 80A, 80B) is stopped, and the detector being configured to detect that the fluid leakage is generated in the pipe line (30) on a downstream side of the valve (110A, 110B, 110C, 111A, 111B) **characterized in that** it is based on a first feature quantity indicating a mutual relationship between the power consumption of the fluid supply apparatus (10) before the closing of the valve (110A, 110B, 110C, 111A, 111B) and the power consumption of the fluid supply apparatus (10) after the closing of the valve (110A, 1108, 110C, 111A, 111B).

2. The detecting apparatus (90) according to claim 1, wherein
the detector is configured to calculate a difference between the power consumption of the fluid supply apparatus (10) before the closing of the valve (110A, 110B, 110C, 111A, 111B)and the power consumption of the fluid supply apparatus (10) after the closing of the valve (110A, 110B, 110C, 111A, 111B) as the first feature quantity, and detect that the fluid leakage is generated in the pipe line (30) on the downstream side of the valve (110A, 110B, 110C, 111A, 111B) when the calculated difference is greater than or equal to a second threshold.

3. The detecting apparatus (90) according to claim 1, wherein
the detector is configured to calculate a ratio of the power consumption of the fluid supply apparatus (10) after the closing of the valve (110A, 110B, 110C, 111A, 111B) to the power consumption of the fluid supply apparatus (10) before the closing of the valve (110A, 110B, 110C, 111A, 111B) as the first feature quantity, and detect that the fluid leakage is generated in the pipe line (30) on the downstream side of the valve (110A, 110B, 110C, 111A, 111B) when the calculated ratio is less than or equal to a third threshold.

4. The detecting apparatus (90) according to any one of claims 1 to 3, wherein
the fluid use apparatus (40A, 40B, 50A, 50B, 60A, 60B, 70A, 70B, 80A, 80B) is provided in plural,
the pipe line (30) is branched so as to be connected to each of the plurality of fluid use apparatuses (40A, 40B, 50A, 50B, 60A, 60B, 70A, 70B, 80A, 80B),
the valve (110A, 110B, 110C, 111A, 111B) is provided between each of the plurality of fluid use apparatuses (40A, 40B, 50A, 50B, 60A, 60B, 70A, 70B, 80A, 80B) and a branch point (31) of the pipe line (30), and
the controller (92, 94) is configured to close the valve (1110A, 110B, 110C, 111A, 111B) provided between the fluid use apparatus (40A, 40B, 50A, 50B, 60A, 60B, 70A, 70B, 80A, 80B) and the branch point (31) of the pipe line (30) when the operation of the fluid use apparatus (40A, 40B, 50A, 50B, 60A, 60B, 70A, 70B, 80A, 80B) is stopped.

5. The detecting apparatus (90) according to any one of claims 1 to 4, wherein
the fluid use apparatus (40A, 40B, 50A, 50B, 60A, 60B, 70A, 70B, 80A, 80B) is configured to work with another fluid use apparatus, and
the controller (92, 94) is configured to stop the operation of the fluid use apparatus (40A, 40B, 50A, 50B, 60A, 60B, 70A, 70B, 80A, 80B) working with the other fluid use apparatus when detecting that an operation of the other fluid use apparatus is stopped.

6. The detecting apparatus (90) according to claim 1, wherein
the fluid use apparatus (40A, 40B, 50A, 50B, 60A, 60B, 70A, 70B, 80A, 80B) is provided in plural,
the pipe line (30) through which the fluid flows to the fluid use apparatus (40A, 40B, 50A, 50B, 60A, 60B, 70A, 70B, 80A, 80B) is branched so as to be connected to each of the plurality of fluid use apparatuses (40A, 40B, 50A, 50B, 60A, 60B, 70A, 70B, 80A, 80B),
the valve (110A, 110B, 110C, 111A, 111B) is provided between each of the plurality of fluid use apparatuses (40A, 40B, 50A, 50B, 60A, 60B, 70A, 70B, 80A, 80B) and a branch point (31) of the pipe line (30), and
the detector is configured to (1) obtain an amount of change in power consumption of the fluid supply apparatus (10) between before and after closing of the valve (110A, 110B, 110C, 111A, 111B) provided between each of the plurality of fluid use apparatuses (40A, 40B, 50A, 50B, 60A, 60B, 70A, 70B, 80A, 80B) and the branch point (31) of the pipe line (30), and (2) detect the fluid leakage in the pipe line (30) on a downstream side of the valve (110A, 110B, 110C, 111A, 111B) provided between each of the plurality of fluid use apparatuses (40A, 40B, 50A, 50B, 60A, 60B, 70A, 70B, 80A, 80B) and the branch point (31) of the pipe line (30) based on a mutual relationship between the amounts of change obtained for the plurality of fluid use apparatuses (40A, 40B, 50A, 50B, 60A, 60B, 70A, 70B, 80A, 80B).

7. The detecting apparatus (90) according to any one of claims 1 to 6, wherein
the valve (110A, 110B, 110C, 111A, 111B) is an electromagnetic valve.

8. The detecting apparatus (90) according to any one of claims 1 to 7, wherein
the fluid is gas, and
the fluid supply apparatus (10) is a compressor configured to generate compressed gas.

9. A detecting method comprising:
a detecting step of detecting a fluid leakage in a system (1) comprising a fluid use apparatus (40A, 40B, 50A, 50B, 60A, 60B, 70A, 70B, 80A, 80B) configured to use a fluid and a fluid supply apparatus (10) configured to supply the fluid to the fluid use apparatus (40A, 40B, 50A, 50B, 60A, 60B, 70A, 70B, 80A, 80B), a valve (110A, 110B, 110C, 111A, 111B) being provided in a pipe line (30) through which the fluid flows to the fluid use apparatus (40A, 40B, 50A, 50B, 60A, 60B, 70A, 70B, 80A, 80B),
wherein
the fluid leakage in the system (1) is detected based on power consumption of the fluid supply apparatus (10), and
it is detected that the fluid leakage is generated in the pipe line (30) on a downstream side of the valve (110A, 110B, 110C, 111A, 111B) based on a first feature quantity indicating a mutual relationship between the power consumption of the fluid supply apparatus (10) before the closing of the valve (110A, 110B, 110C, 111A, 11B) and the power consumption of the fluid supply apparatus (10) after the closing of the valve (110A, 110B, 110C, 111A, 111B), and
the valve (110A, 110B, 110C, 111A, 111B) located on the upstream side of the fluid use apparatus (40A, 40B, 50A, 50B, 60A, 60B, 70A, 70B, 80A, 80B) is closed when an operation of the fluid use apparatus (40A, 40B, 50A, 50B, 60A, 60B, 70A, 70B, 80A, 80B) is stopped.

10. A program, when run on a computer, causing said computer to perform the method according to claim 9.

11. A computer-readable recording medium in which the program according to claim 10 is recorded.

## Patentansprüche

1. Detektionsvorrichtung (90), die zum Erkennen einer Fluidleckage in einem System (1) konfiguriert ist, das eine Fluidbenutzungsvorrichtung (40A, 40B, 50A, 50B, 60A, 60B, 70A, 70B, 80A, 80B), welche zum Benutzen eines Fluids konfiguriert ist, und eine Fluidzufuhrvorrichtung (10) umfasst, die zum Zuführen des Fluids zur Fluidbenutzungsvorrichtung (40A, 40B, 50A, 50B, 60A, 60B, 70A, 70B, 80A, 80B) konfiguriert ist, wobei
ein Detektor zum Erkennen der Fluidleckage im System (1) auf Grundlage eines Leistungsverbrauchs der Fluidzufuhrvorrichtung (10) konfiguriert ist,
ein Ventil (110A, 110B, 110C, 111A, 111B) in einer Rohrleitung (30) vorgesehen ist, durch die das Fluid zur Fluidbenutzungsvorrichtung (40A, 40B, 50A, 50B, 60A, 60B, 70A, 70B, 80A, 80B) strömt, und
die Detektionsvorrichtung ferner eine Steuerung (92, 94) umfasst, die zum Schließen des Ventils (110A, 110B, 110C, 111A, 111B), das sich auf der stromaufwärtigen Seite der Fluidbenutzungsvorrichtung (40A, 40B, 50A, 50B, 60A, 60B, 70A, 70B, 80A, 80B) befindet, konfiguriert ist, wenn ein Betrieb der Fluidbenutzungsvorrichtung (40A, 40B, 50A, 50B, 60A, 60B, 70A, 70B, 80A, 80B) angehalten wird, und
der Detektor zum Erkennen konfiguriert ist, dass die Fluidleckage in der Rohrleitung (30) auf einer stromabwärtigen Seite des Ventils (110A, 110B, 110C, 111A, 111B) erzeugt ist, **dadurch gekennzeichnet, dass** sie auf einer ersten Merkmalsmenge basiert, die eine wechselseitige Beziehung zwischen dem Leistungsverbrauch der Fluidzufuhrvorrichtung (10) vor dem Schließen des Ventils (110A, 110B, 110C, 111A, 111B) und dem Leistungsverbrauch der Fluidzufuhrvorrichtung (10) nach dem Schließen des Ventils (110A, 110B, 110C, 111A, 111B) anzeigt.

2. Detektionsvorrichtung (90) nach Anspruch 1, wobei
der Detektor zum Berechnen einer Differenz zwischen dem Leistungsverbrauch der Fluidzufuhrvorrichtung (10) vor dem Schließen des Ventils (110A, 110B, 110C, 111A, 111B) und dem Leistungsverbrauch der Fluidzufuhrvorrichtung (10) nach dem Schließen des Ventils (110A, 110B, 110C, 111A, 111B) als die erste Merkmalsmenge und zum Erkennen, dass die Fluidleckage in der Rohrleitung (30) auf der stromabwärtigen Seite des Ventils (110A, 110B, 110C, 111A, 111B) erzeugt ist, wenn die berechnete Differenz größer als eine oder gleich einer zweiten Schwelle ist, konfiguriert ist.

3. Detektionsvorrichtung (90) nach Anspruch 1, wobei
der Detektor zum Berechnen eines Verhältnisses des Leistungsverbrauchs der Fluidzufuhrvorrichtung (10) nach dem Schließen des Ventils (110A, 110B, 110C, 111A, 111B) zum Leistungsverbrauch der Fluidzufuhrvorrichtung (10) vor dem Schließen des Ventils (110A, 110B, 110C, 111A, 111B) als die erste Merkmalsmenge und zum Erkennen, dass die Fluidleckage in der Rohrleitung (30) auf der stromabwärtigen Seite des Ventils (110A, 110B, 110C, 111A, 111B) erzeugt ist, wenn das berechnete Verhältnis kleiner als eine oder gleich einer dritten Schwelle ist, konfiguriert ist.

4. Erkennungsvorrichtung (90) nach einem der Ansprüche 1 bis 3, wobei
die Fluidbenutzungsvorrichtung (40A, 40B, 50A, 50B, 60A, 60B, 70A, 70B, 80A, 80B) in Mehrzahl vorgesehen ist,
die Rohrleitung (30) derart verzweigt ist, dass sie mit jeder der mehreren Fluidbenutzungsvorrichtungen (40A, 40B, 50A, 50B, 60A, 60B, 70A, 70B, 80A, 80B) verbunden ist,
das Ventil (110A, 110B, 110C, 111A, 111B) zwischen jeder der mehreren Fluidbenutzungsvorrichtungen (40A, 40B, 50A, 50B, 60A, 60B, 70A, 70B, 80A, 80B) und einem Verzweigungspunkt (31) der Rohrleitung (30) vorgesehen ist, und
die Steuerung zum Schließen des Ventils (110A, 110B, 130C, 111A, 111B), das zwischen der Fluidbenutzungsvorrichtung (40A, 40B, 50A, 50B, 60A, 60B, 70A, 70B, 80A, 80B) und dem Verzweigungspunkt (31) der Rohrleitung (30) vorgesehen ist, konfiguriert ist, wenn der Betrieb der Fluidbenutzungsvorrichtung (40A, 40B, 50A, 50B, 60A, 60B, 70A, 70B, 80A, 80B) angehalten wird.

5. Detektionsvorrichtung (90) nach einem der Ansprüche 1 bis 4, wobei
die Fluidbenutzungsvorrichtung (40A, 40B, 50A, 50B, 60A, 60B, 70A, 70B, 80A, 80B) zum Arbeiten mit einer anderen Fluidbenutzungsvorrichtung konfiguriert ist, und
die Steuerung (92, 94) zum Anhalten des Betriebs der Fluidbenutzungsvorrichtung (40A, 40B, 50A, 50B, 60A, 60B, 70A, 70B, 80A, 80B), die mit der anderen Fluidbenutzungsvorrichtung arbeitet, konfiguriert ist, wenn erkannt wird, dass ein Betrieb der anderen Fluidbenutzungsvorrichtung angehalten wird.

6. Detektionsvorrichtung (90) nach Anspruch 1, wobei
die Fluidbenutzungsvorrichtung (40A, 40B, 50A, 50B, 60A, 60B, 70A, 70B, 80A, 80B) in Mehrzahl vorgesehen ist,
die Rohrleitung (30), durch die das Fluid zur Fluidbenutzungsvorrichtung (40A, 40B, 50A, 50B, 60A, 60B, 70A, 70B, 80A, 80B) strömt, derart verzweigt ist, dass sie mit jeder der mehreren Fluidbenutzungsvorrichtungen (40A, 40B, 50A, 50B, 60A, 60B, 70A, 70B, 80A, 80B) verbunden ist,
das Ventil (110A, 110B, 110C, 111A, 111B) zwischen jeder der mehreren Fluidbenutzungsvorrichtungen (40A, 40B, 50A, 50B, 60A, 60B, 70A, 70B, 80A, 80B) und einem Verzweigungspunkt (31) der Rohrleitung (30) vorgesehen ist, und
der Detektor 1) zum Erhalten einer Änderungsmenge des Leistungsverbrauchs der Fluidzufuhrvorrichtung (10) zwischen vor und nach dem Schließen des Ventils (110A, 110B, 110C, 111A, 111B), das zwischen jeder der mehreren Fluidbenutzungsvorrichtungen (40A, 40B, 50A, 50B, 60A, 60B, 70A, 70B, 80A, 80B) und dem Verzweigungspunkt (31) der Rohrleitung (30) vorgesehen ist, und 2) zum Erkennen der Fluidleckage in der Rohrleitung (30) auf einer stromabwärtigen Seite des Ventils (110A, 110B, 110C, 111A, 111B), das zwischen jeder der mehreren Fluidbenutzungsvorrichtungen (40A, 40B, 50A, 50B, 60A, 60B, 70A, 70B, 80A, 80B) und dem Verzweigungspunkt (31) der Rohrleitung (30) vorgesehen ist, auf Grundlage einer wechselseitigen Beziehung zwischen den Änderungsmengen, die für die mehreren Fluidbenutzungsvorrichtungen (40A, 40B, 50A, 50B, 60A, 60B, 70A, 70B, 80A, 80B) erhalten wurden, konfiguriert ist.

7. Detektionsvorrichtung (90) nach einem der Ansprüche 1 bis 6, wobei
das Ventil (110A, 110B, 110C, 111A, 111B) ein elektromagnetisches Ventil ist.

8. Detektionsvorrichtung (90) nach einem der Ansprüche 1 bis 7, wobei
das Fluid Gas ist, und
die Fluidzufuhrvorrichtung (10) ein Kompressor ist, der zum Erzeugen von Druckgas konfiguriert ist.

9. Detektionsverfahren, umfassend:
einen Detektionsschritt des Erkennens einer Fluidleckage in einem System (1), das eine Fluidbenutzungsvorrichtung (40A, 40B, 50A, 50B, 60A, 60B, 70A, 70B, 80A, 80B), welche zum Benutzen eines Fluids konfiguriert ist, und eine Fluidzufuhrvorrichtung (10) umfasst, die zum Zuführen des Fluids zur Fluidbenutzungsvorrichtung (40A, 40B, 50A, 50B, 60A, 60B, 70A, 70B, 80A, 80B) konfiguriert ist, wobei ein Ventil (110A, 110B, 110C, 111A, 111B) in einer Rohrleitung (30) vorgesehen ist, durch die das Fluid zur Fluidbenutzungsvorrichtung (40A, 40B, 50A, 50B, 60A, 60B, 70A, 70B, 80A, 80B) strömt,
wobei
die Fluidleckage im System (1) auf Grundlage eines Leistungsverbrauchs der Fluidzufuhrvorrichtung (10) erkannt wird, und
erkannt wird, dass die Fluidleckage in der Rohrleitung (30) auf einer stromabwärtigen Seite des Ventils (110A, 110B, 110C, 111A, 111B) erzeugt ist, basierend einer ersten Merkmalsmenge, die eine wechselseitige Beziehung zwischen dem Leistungsverbrauch der Fluidzufuhrvorrichtung (10) vor dem Schließen des Ventils (110A, 110B, 110C, 111A, 111B) und dem Leistungsverbrauch der Fluidzufuhrvorrichtung (10) nach dem Schließen des Ventils (110A, 310B, 110C, 111A, 111B) anzeigt, und
das Ventil (110A, 110B, 110C, 111A, 111B), das sich auf der stromaufwärtigen Seite der Fluidbenutzungsvorrichtung (40A, 40B, 50A, 50B, 60A, 60B, 70A, 70B, 80A, 80B) befindet, geschlossen wird, wenn ein Betrieb der Fluidbenutzungsvorrichtung (40A, 40B, 50A, 50B, 60A, 60B, 70A, 70B, 80A, 80B) angehalten wird.

10. Programm, das, wenn es auf einem Rechner läuft, bewirkt, dass der Rechner das Verfahren gemäß Anspruch 9 ausführt.

11. Maschinenlesbares Aufzeichnungsmedium, in dem das Programm gemäß Anspruch 10 aufgezeichnet ist.

## Revendications

1. Appareil de détection (90), configuré pour détecter une fuite de fluide dans un système (1) comprenant un appareil d'utilisation de fluide (40A, 40B, 50A, 50B, 60A, 60B, 70A, 70B, 80A, 80B) configuré pour utiliser un fluide et un appareil d'alimentation de fluide (10) configuré pour alimenter le fluide à l'appareil d'utilisation de fluide (40A, 40B, 50A, 50B, 60A, 60B, 70A, 70B, 80A, 80B), dans lequel :
un détecteur est configuré pour détecter la fuite de fluide dans le système (1) sur la base d'une consommation de puissance de l'appareil d'alimentation de fluide (10),
une vanne (110A, 110B, 110C, 111A, 111B) étant prévue dans une conduite (30) au travers de laquelle le fluide s'écoule jusqu'à l'appareil d'utilisation de fluide (40A, 40B, 50A, 50B, 60A, 60B, 70A, 70B, 80A, 80B), et
l'appareil de détection comprenant en outre un contrôleur (92, 94) configuré pour fermer la vanne (110A, 110B, 110C, 111A, 111B) située sur le côté amont de l'appareil d'utilisation de fluide (40A, 40B, 50A, 50B, 60A, 60B, 70A, 70B, 80A, 80B) lorsqu'un fonctionnement de l'appareil d'utilisation de fluide (40A, 40B, 50A, 50B, 60A, 60B, 70A, 70B, 80A, 80B) est arrêté, et
le détecteur étant configuré pour détecter que la fuite de fluide est générée dans la conduite (30) sur un côté aval de la vanne (110A, 110B, 110C, 111A, 111B), **caractérisé en ce qu'**il est basé sur une première quantité de caractéristique indiquant une relation mutuelle entre la consommation de puissance de l'appareil d'alimentation de fluide (10) avant la fermeture de la vanne (110A, 110B, 110C, 111A, 111B) et la consommation de puissance de l'appareil d'alimentation en fluide (10) après la fermeture de la vanne (110A, 110B, 110C, 111A, 111B).

2. Appareil de détection (90) selon la revendication 1, dans lequel:
le détecteur est configuré pour à calculer une différence entre la consommation de puissance de l'appareil d'alimentation de fluide (10) avant la fermeture de la vanne (110A, 110B, 110C, 111A, 111B) et la consommation de puissance de l'appareil d'alimentation de fluide (10) après la fermeture de la vanne (110A, 110B, 110C, 111A, 111B) en tant que première quantité de caractéristique, et pour détecter que la fuite de fluide est générée dans la conduite (30) sur le côté aval de la vanne (110A, 110B, 110C, 111A, 111B) lorsque la différence calculée est supérieure ou égale à un deuxième seuil.

3. Appareil de détection (90) selon la revendication 1, dans lequel:
le détecteur est configuré pour calculer un rapport de la consommation de puissance de l'appareil d'alimentation de fluide (10) après la fermeture de la vanne (110A, 110B, 110C, 111A, 111B) par rapport à la consommation de puissance de l'appareil d'alimentation en fluide (10) avant la fermeture de la vanne (110A, 110B, 110C, 111A, 111B) en tant que première quantité de caractéristique, et de manière à détecter que la fuite de fluide est générée dans la conduite (30) sur le côté aval de la vanne (110A, 110B, 110C, 111A, 111B) lorsque le rapport calculé est inférieur ou égal à un troisième seuil.

4. Appareil de détection (90) selon l'une quelconque des revendications 1 à 3, dans lequel :
l'appareil d'utilisation de fluide (40A, 40B, 50A, 50B, 60A, 60B, 70A, 70B, 80A, 80B) est prévu selon un nombre pluriel,
la conduite (30) est dérivée de sorte à être connectée à chacun de la pluralité d'appareils d'utilisation de fluide (40A, 40B, 50A, 50B, 60A, 60B, 70A, 70B, 80A, 80B),
la vanne (110A, 110B, 110C, 111A, 111B) est prévue entre chacun de la pluralité d'appareils d'utilisation de fluide (40A, 40B, 50A, 50B, 60A, 60B, 70A, 70B, 80A, 80B) et un point de dérivation (31) de la conduite (30), et
le contrôleur (92, 94) est configuré de manière à fermer la vanne (110A, 110B, 110C, 111A, 111B) qui est prévue entre l'appareil d'utilisation de fluide (40A, 40B, 50A, 50B, 60A, 60B, 70A, 70B, 80A, 80B) et le point de dérivation (31) de la conduite (30) lorsque le fonctionnement de l'appareil d'utilisation de fluide (40A, 40B, 50A, 50B, 60A, 60B, 70A, 70B, 80A, 80B) est arrêté.

5. Appareil de détection (90) selon l'une quelconque des revendications 1 à 4, dans lequel:
l'appareil d'utilisation de fluide (40A, 40B, 50A, 50B, 60A, 60B, 70A, 70B, 80A, 80B) est configuré pour marcher avec un autre appareil d'utilisation de fluide, et
le contrôleur (92, 94) est configuré pour arrêter le fonctionnement de l'appareil d'utilisation de fluide (40A, 40B, 50A, 50B, 60A, 60B, 70A, 70B, 80A, 80B) marchant avec l'autre appareil d'utilisation de fluide lors de la détection du fait qu'un fonctionnement de l'autre appareil d'utilisation de fluide est arrêté.

6. Appareil de détection (90) selon la revendication 1, dans lequel:
l'appareil d'utilisation de fluide (40A, 40B, 50A, 50B, 60A, 60B, 70A, 70B, 80A, 80B) est prévu en pluralité,
la conduite (30) au travers de laquelle le fluide s'écoule jusqu'à l'appareil d'utilisation de fluide (40A, 40B, 50A, 50B, 60A, 60B, 70A, 70B, 80A, 80B) est dérivée de manière à ce qu'elle soit connectée à chacun de la pluralité d'appareils d'utilisation de fluide (40A, 40B, 50A, 50B, 60A, 60B, 70A, 70B, 80A, 80B),
la vanne (110A, 110B, 110C, 111A, 111B) est prévue entre chacun de la pluralité d'appareils d'utilisation de fluide (40A, 40B, 50A, 50B, 60A, 60B, 70A, 70B, 80A, 80B) et un point de dérivation (31) de la conduite (30), et
le détecteur est configuré (1) pour obtenir une quantité de variation de la consommation de puissance de l'appareil d'alimentation de fluide (10) entre avant et après la fermeture de la vanne (110A, 110B, 110C, 111A, 111B) prévue entre chacun de la pluralité d'appareils d'utilisation de fluide (40A, 40B, 50A, 50B, 60A, 60B, 70A, 70B, 80A, 80B) et le point de dérivation (31) de la conduite (30) et (2) pour détecter la fuite de fluide dans la conduite (30) sur un côté aval de la vanne (110A, 110B, 110C, 111A, 111B) prévue entre chacun de la pluralité d'appareils d'utilisation de fluide (40A, 40B, 50A, 50B, 60A, 60B, 70A, 70B, 80A, 80B) et le point de dérivation (31) de la conduite (30) sur la base d'une relation mutuelle entre les quantités de variation obtenues pour la pluralité d'appareils d'utilisation de fluide (40A, 40B, 50A, 50B, 60A, 60B, 70A, 70B, 80A, 80B).

7. Appareil de détection (90) selon l'une quelconque des revendications 1 à 6, dans lequel:
la vanne (110A, 110B, 110C, 111A, 111B) est une vanne électromagnétique.

8. Appareil de détection (90) selon l'une quelconque des revendications 1 à 7, dans lequel:
le fluide est un gaz, et
l'appareil d'alimentation de fluide (10) est un compresseur qui est configuré pour générer du gaz comprimé.

9. Procédé de détection comprenant:
une étape de détection de détection d'une fuite de fluide dans un système (1) comprenant un appareil d'utilisation de fluide (40A, 40B, 50A, 50B, 60A, 60B, 70A, 70B, 80A, 80B) configuré pour utiliser un fluide et un appareil d'alimentation de fluide (10) configuré pour alimenter le fluide à l'appareil d'utilisation de fluide (40A, 40B, 50A, 50B, 60A, 60B, 70A, 70B, 80A, 80B), une vanne (110A, 110B, 110C, 111A, 111B) prévue dans une conduite (30) au travers de laquelle le fluide circule jusqu'à l'appareil d'utilisation de fluide (40A, 40B, 50A, 50B, 60A, 60B, 70A, 70B, 80A, 80B), dans lequel:
la fuite de fluide dans le système (1) est détectée sur la base de la consommation de puissance de l'appareil d'alimentation en fluide (10), et
il est détecté que la fuite de fluide est générée dans la conduite (30) sur un côté aval de la vanne (110A, 110B, 110C, 111A, 111B) sur la base d'une première quantité de caractéristique indiquant une relation mutuelle entre la consommation de puissance de l'appareil d'alimentation de fluide (10) avant la fermeture de la vanne (110A, 110B, 110C, 111A, 111B) et la consommation de puissance de l'appareil d'alimentation de fluide (10) après la fermeture de la vanne (110A, 110B, 110C, 111A, 111B), et
la vanne (110A, 110B, 110C, 111A, 111B) située sur le côté amont de l'appareil d'utilisation de fluide (40A, 40B, 50A, 50B, 60A, 60B, 70A, 70B, 80A, 80B) est fermée lorsqu'un fonctionnement de l'appareil d'utilisation de fluide (40A, 40B, 50A, 50B, 60A, 60B, 70A, 70B, 80A, 80B) est arrêté.

10. Programme qui, lorsqu'il est exécuté sur un ordinateur, cause la réalisation par l'ordinateur du procédé selon la revendication 9.

11. Support d'enregistrement lisible par ordinateur dans lequel le programme selon la revendication 10 est enregistré.
